# EUROPEAN PATENT APPLICATION

(11) **EP 4 684 757 A1**
(43) Date of publication of application: **28.01.2026**
(21) Application number: 24191319.3
(22) Date of filing: 27.07.2024
(51) Int. Cl.: A61C 17/22, A61C 17/34

(54) **ELECTRIC TOOTHBRUSH**

(71) Applicant: materialise Oy, 23100 Mynämäki (FI)
(72) Inventor: Kaarniittu, Joni, 23100 Mynämäki (FI)
(74) Representative: Dalek, Arkadius Jan

(57) **Abstract**

An inventive electric toothbrush comprises a handle, a bristle holder directly carrying a plurality of bristles, the bristle holder being mounted movably relative to the handle, a drive for driving the bristle holder in an oscillating and/or rotating manner, magnetic coupling in drive connection between the drive and the bristle holder in order to transmit drive torque from the drive exclusively via a magnetic force of the magnetic coupling to the bristle holder to drive the plurality of bristles of the bristle holder.

## Description

The invention relates to an electric toothbrush, in particular, according to the features of the independent claims.

Electric toothbrushes are known in the prior art and typically comprise a handle, a movable bristle holder fixed at a replaceable mouthpiece, and a drive on which the mouthpiece is connectable in order to move the bristles of the bristle holder. Usually, the movement is transmitted through mechanical connections, which often leads to wear and noise development which affects the lifespan and reliability of the toothbrush. Moreover, mechanical connections often lead to increased noise levels, which can be perceived as unpleasant. Additionally, the mechanical couplings introduce vibrations and cause the toothbrush to run unsteadily. Due to mechanical impacts, the known toothbrushes are not that gentle on the teeth.

The object of the present invention is to provide an electric toothbrush that offers improved durability and reliability while operating more quietly. This object is achieved by the inventive subject matter of claim 1. The dependent claims represent particularly preferred embodiments of the invention.

An inventive electric toothbrush comprises a handle, a bristle holder-which preferably is direct - carrying a plurality of bristles, the bristle holder being mounted movably relative to the handle, a drive for driving the bristle holder in an oscillating and/or rotating manner, and magnetic coupling in drive connection between the drive and the bristle holder to transmit drive torque from the drive - preferably exclusively, e.g. only - via a magnetic force of the magnetic coupling to the bristle holder to drive the plurality of bristles of the bristle holder. This results in a quieter and more durable toothbrush as mechanical connecting parts are reduced since the whole power (torque) transmission through the magnetic coupling is purely magnetic, resulting in a less rigid coupling, which helps to protect the material and tooth.

Advantageously, the handle has a mouthpiece at its one free end, wherein the mouthpiece is made in one piece with the handle. This increases stability and reduces the number of required parts. Thereby, the mouthpiece may have a smaller diameter than the handle to introduce it more easily into the mouth of the user.

Preferably, the bristle holder is - preferably directly - detachably connectable to the handle or the mouthpiece in order to replace the bristle holder, wherein the bristle holder is detachably connectable along its axis of rotation around which it rotates or oscillates relative to the handle. This allows for easy replacement of the bristle holder and improves user-friendliness. In addition, only the brush holder - and not the mouthpiece too as is the case with prior art electric toothbrushes - needs to be replaced, resulting in less material and waste.

In a particular embodiment, the bristle holder is at least partially guided or rotatably supported around at least a part of its circumference in the handle or the mouthpiece. This ensures stable and precise movement of the bristle holder.

Advantageously, the first coupling half of the magnetic coupling is - preferably mechanically - coupled to or formed by the drive and the second coupling half is - preferably mechanically - coupled to or integrated into the bristle holder or the bristle holder forms such a second coupling half. This ensures efficient transmission of drive torque and reduces mechanical wear. In principle, the bristle holder and the second coupling half could be designed separately from each other. This would have the advantage that if the bristle holder is to be replaced because it is worn, the second coupling half does not have to be replaced. This in turn contributes to material savings.

Preferably, the drive comprises at least a linear motor or solenoid, the linear motor or solenoid comprising a slider, wherein the slider performs alternately a linear movement in opposite directions to one another, e.g. a back and forth movement and at least a permanent magnet is arranged at the free end of the slider, wherein the permanent magnet on the one end of the slider forms the first coupling half and is orientated towards and interacts with at least one, preferably two permanent magnets of the second coupling half via a magnetic force in such a way that the linear movement of the slider and thus of the first coupling half is converted into a rotary movement of the second coupling half by means of the magnetic force between the permanent magnet of the slider and the permanent magnets of the second coupling half.

In other words: The slider performs a linear movement back and forth. The permanent magnet attached to its free end forms the first coupling half and interacts with the another permanent magnets forming the second coupling half. As the slider moves linearly back and forth, the permanent magnet(s) on the first and second coupling halves alternately attract and repel each other due to their magnetic forces. This alternating attraction and repulsion cause the linear movement of the slider to be converted into a rotary movement in the second coupling half, enabling the toothbrush's bristles to rotate]

Alternatively, the drive comprises two linear motors or two solenoids arranged parallel to each other, each linear motor or solenoid comprising a slider, wherein the sliders perform a linear movement in opposite directions to one another and permanent magnets are arranged at the free ends of the sliders, wherein the permanent magnets on the sliders form the first coupling half and interact with permanent magnets of the second coupling half via a magnetic force in such a way that the linear movement of the sliders and thus of the first coupling half is converted into a rotary movement of the second coupling half by means of the magnetic force.

In a particular embodiment, the drive comprises at least one electromagnet, respectively two electromagnets arranged parallel to each other, each electromagnet being operated such that its polarity is changed alternately so that in case of two electromagnets, both electromagnets have alternating opposite polarities e.g. - at the same time - in order to perform an attraction force or a repulsive force with the respective at least one, preferably two permanent magnets of the second coupling half via a magnetic force in such a way that the change in polarity of the at least one electromagnet and thus of the first coupling half is converted into a rotary movement of the second coupling half by means of the magnetic force between the repective at least one electromagnet and its opposite permanent magnet of the second coupling half. Thereby, if only one electromagnet ist used, it can comprise one iron heart, but with two different coils on top of each other as seen in longitudinal direction of the coil of the electromagnet.

In other words: since the drive comprises either two electromagnets arranged parallel to each other or one electromagnet with a variable electric current, in the first case of two electromagnets, each electromagnet is operated such that the polarity of the two electromagnets is changed alternately, resulting in alternating opposite polarities at the same free end of the electromagnet. This setup creates an attraction force or a repulsive force with the respective permanent magnets of the second coupling half via a magnetic force. Alternatively, a single electromagnet with a variable electric current can be used to generate a parallel magnetic field that interacts with the permanent magnets of the second coupling half. In both configurations, due to the change in polarity or the variation of the magnetic field of the electromagnets and thus of the first coupling half torque is converted from that magentic field change into a rotary movement of the second coupling half.

Advantageously, the drive and/or the first coupling half of the magnetic coupling is/are arranged inside the handle or the mouthpiece. This protects the mechanical components and increases the longevity of the toothbrush. A one-piece design also creates a more attractive aesthetic for the electric toothbrush.

Preferably, a pressure sensor or movement sensor is provided, which automatically activates the drive when pressure on the bristle holder or a movement of the handle or the electric toothbrush is detected by the movement sensor. This allows for automatic activation of the toothbrush and enhances user convenience. Further, this makes it possible to dispense with switches or buttons, which contributes to the aesthetics.

In a particular embodiment, the handle is free of buttons, and the drive is activated exclusively by the pressure or movement sensor. This improves the design and user-friendliness of the toothbrush.

Advantageously, the electric toothbrush comprises a control unit for operating the electric toothbrush and a battery that is connectable to the control unit in order to supply the drive with power. This enables a secure wireless energy supply and thus a wireless operation of the toothbrush.

Preferably, the drive, the control unit, and the battery can be inserted into and removed from the handle by an opening at the free end of the handle facing away from the mouthpiece. This facilitates maintenance, replacement, and recycling of components.

In a particular embodiment, the control unit includes a charging unit or is connectable to the control unit and the battery in order to e.g. inductively charge the battery. This allows for convenient wireless charging of the toothbrush.

Advantageously, the charging unit is arranged in the area of the opening and comprises means for sealing the opening in a closing manner. There can be provided a lid or a closure for the opening on one of the free end of the handle which lid fits sealingly in the opening in a closing manner. This protects the internal components from moisture and dirt. In case, the electric toothbrush needs to be opened, e.g. in order to be recycled, the lid or closure is removed and also the components of the inside of the electric toothbrush are removed.

Preferably, the control unit, the battery, and the drive are preferably built-in modules and can be connected and disconnected to one another electrically, preferably by hand, by means of plug-in elements, so that preferably no tools are needed to assemble and disassemble them. This simplifies the handling and maintenance of the toothbrush.

The advantages of the invention will now be illustrated in more detail with reference to a preferred embodiment and the figures.

It shows:
- Fig. 1: a schematic representation of an electric toothbrush according to one embodiment;
- Fig. 2a: a detailed view of a magnetic coupling according to a first embodiment;
- Fig. 2b: a detailed view of a magnetic coupling according to a second embodiment.

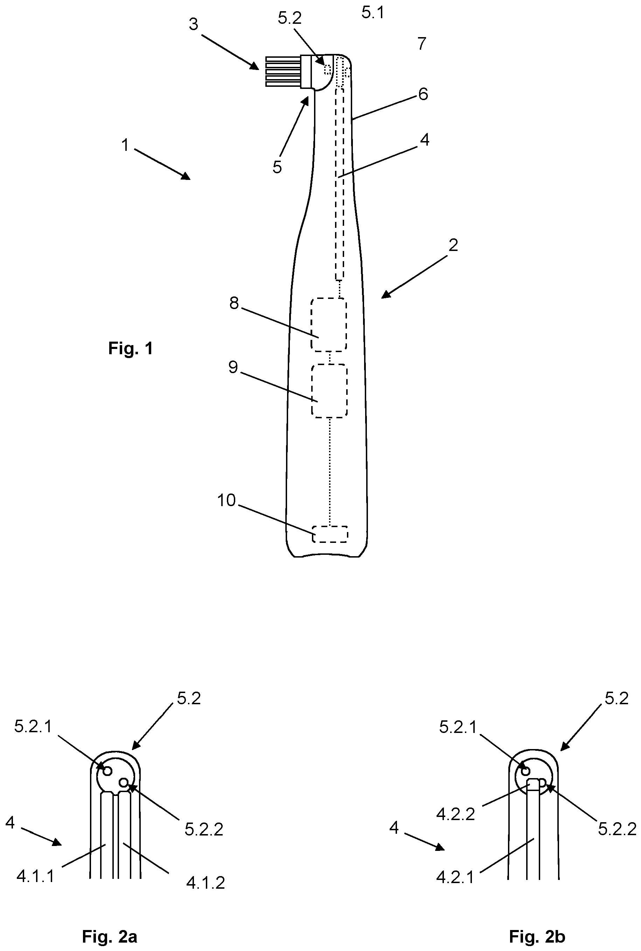

Fig. 1 shows a schematic representation of an electric toothbrush 1 that comprises a handle 2 and a bristle holder 3 carrying a plurality of bristles.

The bristle holder 3 is mounted movably relative to the handle 2 which means that it can rotate and/or oscillate around a rotary axis, which is perpendicular to the longitudinal axis of the handle 2 relative to the handle 2.

The electric toothbrush 1 comprises a drive 4 for driving the bristle holder 3 in an oscillating and/or rotating manner. Further, a magnetic coupling 5 is provided in the drive connection between drive 4 and the bristle holder 3 in order to transmit drive torque from drive 4 via e.g. solely a magnetic force of the magnetic coupling 5 to the bristle holder 3 in order to drive the plurality of bristles of the bristle holder 3 and clean the teeth of the user.

Thereby, the handle 2 has a mouthpiece 6 at its one free end, wherein the mouthpiece 6 is made in one piece with the handle 2. As disclosed, mouthpiece 6 has a smaller diameter than handle 2 to introduce it easier into the mouth of the user.

The bristle holder 3 is detachably connectable to the handle 2 or the mouthpiece 6 in order to replace the bristle holder 3 when it is worn. In other words, the bristle holder 3 is detachably connectable along its axis of rotation around which it rotates or oscillates relative to the handle 2. The advantage of the inventive electric toothbrush 1 is that the user does not have to replace the entire mouthpiece 6 but only the bristle holder 3 when it is worn. This saves material and protects the environment.

The bristle holder 3 can at least partially be guided or rotatably supported around at least a part of its circumference in the handle 2, more in detail around the mouthpiece 6. This also prevents the bristle holder 3 from falling off the mouthpiece 6 during operation.

A first coupling half 5.1 of the magnetic coupling 5 is coupled to or formed by the drive 4 and the second coupling half 5.2 is coupled to or integrated into the bristle holder 3 or the bristle holder forms 3 such a second coupling half 5.2. In this way, drive power can be transferred from drive 4 to the bristle holder 3 purely magnetically from the first coupling half 5.1 of the magnetic coupling 5 to its second coupling half 5.2 and finally to the bristle holder 3. The following components are therefore connected in series in the direction of force transmission: Drive 4, first coupling half 5.1, second coupling half 5.2, and bristle holder 3.

The electric toothbrush 1 comprises a control unit 8 for operating the electric toothbrush 1 and a rechargeable battery 9 that is connectable to the control unit 8 in order to supply the drive 4 with power, see the dotted lines.

Further, a pressure sensor 7 is provided, which automatically activates the drive when pressure on the bristle holder 3 is detected by the pressure sensor 7. Alternatively, the pressure sensor 7 could be a movement sensor to detect the movement of the handle 2 or the electric toothbrush 1. The mentioned sensors allow for automatic activation of the electric toothbrush 1 and enhance the user convenience since it is possible to dispense with switch on and off buttons. The pressure sensor 7 (or the movment sensor) is therefore connected to the control unit 8. Thus, the handle 2 is free of buttons, and the drive 4 is solely activated exclusively by the pressure or movement sensor. Further to the control unit 8 a charging unit 10 is assigned or is connectable to the control unit 8 and the battery 9 in order to e.g. inductively charge the battery 9. This allows for convenient wireless charging of the electric toothbrush 1.

As shown in Fig. 1, drive 4 and the first coupling half 5.1 of the magnetic coupling 5 are arranged inside the handle 2, more precisely inside the mouthpiece 6, or are completely enclosed by its housing. Thereby, the control unit 8, the battery 9, and the drive 4 are built-in modules and can be connected and disconnected to one another electrically, preferably by hand, by means of plug-in elements inside the housing of the handle 2 or the mouthpiece 6 so that preferably no tools are needed to assemble and disassemble them. Also, the interchang of broken components is improved. Furthermore, the drive 4, the control unit 8 and the battery 9 can be inserted into and removed from the handle 2 or the mouthpiece 6 by an opening at the free end of the handle facing away from the mouthpiece 6. Thus, the charging unit 10 may be arranged in the area of the opening and comprises means for sealing closing the opening such that the internal components like the drive 4, the control unit 8, the battery 9, and the charging unit 10 itself are protected from moisture and dirt.

Fig. 2a shows in a schematic detail view a particular embodiment in which drive 4 includes two electromagnets 4.1.1, and 4.1.2 arranged parallel to each other side by side, which means that their longitudinal axes are parallel to each other and both electromagnets 4.1.1, 4.1.2 are spaced apart from each other by a distance, essentially the same distance as the permanent magnets 5.2.1 , 5.2.2 are spaced apart. The latter may have different polarities from each other. Each electromagnet 4.1.1, 4.1.2 is operated by the control unit 10 with power from the battery 9 alternately, such that the polarity of the two electromagnets 4.1.1, 4.1.2 can be changed alternately so that both electromagnets 4.1.1, 4.1.2 have alternating opposite polarities at the same time in order to perform an attraction force or a repulsive force with respective permanent magnets 5.2.1, 5.2.2 of the second coupling half 5.2 via a magnetic force in such a way that the change in polarity of the electromagnets 4.1.1, 4.1.2 and thus of the first coupling half 5.1 is converted into a rotary movement of the second coupling 5.2 half by means of the magnetic force between the respective electromagnet 4.1.1, 4.1.2 and its opposite permanent magnet 5.2.1, 5.2.2. In other words, the respective electromagnets 4.1.1, and 4.1.2 are not moving, they are stationary. The change in polarity induces a rotary or oscillating movement of the permanent magnets 5.2.1, 5.2.2 which is transmitted e.g. mechanically to the bristle holder 3. This embodiment offers an alternative method of driving the bristle holder 3 that is particularly quiet and near wear-free because of the reduced movable parts. The strength of the electromagnets 4.1.1, and 4.1.2 is matched to the strength of the permanent magnets 5.2.1, and 5.2.2, resulting in a corresponding driving force that induces a movement of the bristle holder 3, which enables the electric toothbrush 1 to brush the teeth effectively. Alternately, it is also possible to have the other electromagnet of the two electromagnets completely off while the one electromagnet is on. The electromagnets will be activated one after the other and start an endless cycle of "on/off" as long as power is provided. This kind of connection is called "astable mode". Either the electromagnets are pushing or pulling while they are not simultaneously activated because electromagnets temp to head if they are working for too long.

Fig. 2b shows a schematic detail view of another embodiment of the drive 4. The drive 4 includes a linear motor or a solenoid. This linear motor comprises a (single) slider 4.2.1, which performs a linear movement. A permanent magnet 4.2.2 is arranged at the free end of the slider 4.2.1 facing the permanent magnets 5.2.1 and 5.2.2 of the second coupling half 5.2. The permanent magnet 4.2.2 may have a different polarity from the permanent magnets 5.2.1 and 5.2.2 of the second coupling half 5.2. Thereby, the permanent magnet 4.2.2 on the slider 4.2.1 forms the first coupling half 5.1 and interacts with the permanent magnets 5.2.1 and 5.2.2 of the second coupling half 5.2 via a magnetic force in such a way that the linear movement of the slider 4.2.1 and thus of the first coupling half 5.1 is converted into a rotary movement of the second coupling half 5.2 solely by means of the magnetic force between the two coupling halves 5.1, 5.2. Although not shown, also teo linear motors could be arranged in parallel side by side, each one having a permanent magnet on its free end facing and being arranged opposite to each one of the permanent magnets 5.2.1 and 5.2.2.

When using this electric toothbrush 1, the user would first lift the electric toothbrush 1, which controls unit 10 and activates the drive 4 through the integrated pressure or movement sensors by feeding power from the battery 9 to the drive unit 4. These sensors automatically detect the presence of the user's hand or the motion of lifting the electric toothbrush 1, ensuring that it begins operating without the need for any buttons.

Once activated, the drive 4 initiates movement, and the magnetic coupling 5 transmits the drive torque from the drive 4 to the bristle holder 3. The transmission of drive torque occurs exclusively through magnetic forces between these two coupling halves 5.1, 5.2, ensuring a smooth and efficient transfer of drive power only by magnetism. This purely magnetic transmission reduces mechanical wear and eliminates the need for physical contact between the coupling components.

As the drive torque is transmitted to the bristle holder 3, the bristles begin to oscillate or rotate, effectively cleaning the user's teeth. At the same time, the method of power transmission ensures a quieter operation compared to traditional mechanical couplings, which can produce vibrations and an unsteady brushing experience.

The advantages of this electric toothbrush for the user are numerous. Traditional electric toothbrushes suffer from mechanical wear, increased noise levels, vibrations, and unsteady operation, which can be unpleasant and less effective for dental care. The magnetic coupling 5 in this invention addresses these issues by reducing mechanical wear and providing a quieter, smoother brushing experience. The purely magnetic transmission of drive torque eliminates vibrations and ensures steady operation, protecting both the electric toothbrush and the user's teeth. Additionally, the absence of physical buttons, thanks to the pressure and movement sensors, enhances the electric toothbrush's design and user-friendliness. The ability to replace the bristle holder 3 without tools adds to the convenience, and the waterproof handle 2 ensures safe use in moist environments. Overall, this innovative electric toothbrush significantly improves upon the disadvantages of prior art, offering a more durable, reliable, and user-friendly brushing experience.

## Claims

1. Electric toothbrush, comprising: a handle, a bristle holder carrying a plurality of bristles, the bristle holder being mounted movably relative to the handle, a drive for driving the bristle holder in an oscillating and/or rotating manner, a magnetic coupling in drive connection between the drive and the bristle holder in order to transmit drive torque from the drive via a magnetic force of the magnetic coupling to the bristle holder to drive the plurality of bristles of the bristle holder.

2. Electric toothbrush according to claim 1, **characterised in that** the handle comprises on its one free end a mouthpiece, wherein the mouthpiece is made in one piece with the handle.

3. Electric toothbrush according to claims 1 or 2, **characterised in that** the bristle holder is detachably connectable to the handle or the mouthpiece in order to replace the bristle holder, wherein the bristle holder is detachably connectable along its axis of rotation around which it rotates or oscillates relative to the handle.

4. Electric toothbrush according to claims 2 or 3, **characterised in that** the bristle holder is at least partially guided or rotatably supported around at least a part of its circumference in the handle or the mouthpiece.

5. Electric toothbrush according to one of claims 1 to 4, **characterised in that** the first coupling half of the magnetic coupling is coupled to or formed by the drive, and the second coupling half is coupled to or integrated into the bristle holder or the bristle holder forms such one-second coupling half.

6. Electric toothbrush according to one of claims 1 to 5, **characterised in that** the drive comprises at least a linear motor or solenoid, the linear motor or solenoid comprising a slider, wherein the slider performs alternately a linear movement in opposite directions to one another, e.g. a back and forth movement and at least a permanent magnet is arranged at the free end of the slider, wherein the at least one permanent magnet on the one end of the slider forms the first coupling half and is orientated towards and interacts with at least one, preferably two permanent magnets of the second coupling half via a magnetic force in such a way that the linear movement of the slider and thus of the first coupling half is converted into a rotary movement of the second coupling half by means of the magnetic force between the permanent magnet of the slider and the permanent magnets of the second coupling half.

7. Electric toothbrush according to one of claims 1 to 5, **characterised in that** the drive comprises at least one electromagnet, respectively two electromagnets arranged parallel to each other, each electromagnet being operated such that its polarity is changed alternately so that in case of two electromagnets, both electromagnets have alternating opposite polarities e.g. - at the same time - in order to perform an attraction force or a repulsive force with the respective at least one, preferably two permanent magnets of the second coupling half via a magnetic force in such a way that the change in polarity of the at least one electromagnet and thus of the first coupling half is converted into a rotary movement of the second coupling half by means of the magnetic force between the repective at least one electromagnet and its opposite permanent magnet of the second coupling half.

8. Electric toothbrush according to one of claims 2 to 7, **characterised in that** drive and/or the first coupling half of the magnetic coupling is/are arranged inside the handle or the mouthpiece.

9. Electric toothbrush according to one of the claims 1 to 8, **characterised in that** a pressure sensor or movement sensor is provided, which automatically activates the drive when pressure on the bristle holder or a movement of the handle or the electric toothbrush is detected by the movement sensor.

10. Electric toothbrush according to claim 9, **characterised in that** the handle is free of buttons and the drive is activated exclusively by the pressure or movement sensor.

11. Electric toothbrush according to one of claims 1 to 10, **characterised in that** the electric toothbrush comprises a control unit for operating the electric toothbrush and a battery that is connectable to the control unit in order to supply the drive with power.

12. Electric toothbrush according to claim 11, **characterised in that** drive, the control unit and the battery can be inserted into and removed from the handle by an opening at the free end of the handle facing away from the mouthpiece.

13. Electric toothbrush according to claims 11 or 12, **characterised in that** the control unit comprises a charging unit or is connectable to the control unit and the battery in order to e.g. inductively charge the battery.

14. Electric toothbrush according to claim 13, **characterised in that** the charging unit is arranged in the area of the opening and comprises means for sealing the opening in a closing manner, such as a lid.

15. Electric toothbrush according to one of the claims 11 to 14, **characterised in that** control unit, the battery, and the drive are preferably built-in modules and can be connected and disconnected to one another electrically - preferably by hand - by means of plug-in elements so that preferably no tools are needed to assemble and disassemble them.
